(19) Europäisches Patentamt
European Patent Office
Office européen des brevets

(11) EP 0 696 957 B1

(12) **EUROPÄISCHE PATENTSCHRIFT**

(45) Veröffentlichungstag und Bekanntmachung des Hinweises auf die Patenterteilung:
26.03.1997 Patentblatt 1997/13

(21) Anmeldenummer: 93920814.6

(22) Anmeldetag: 24.09.1993

(51) Int. Cl.⁶: **B29C 47/52**, A21C 11/16

(86) Internationale Anmeldenummer:
PCT/EP93/02592

(87) Internationale Veröffentlichungsnummer:
WO 94/25247 (10.11.1994 Gazette 1994/25)

(54) **WALZENPRESSE ZUM EXTRUDIEREN EINES GEFÜLLTEN ODER MEHRLAGIGEN STRANGES AUS PLASTISCHEN MASSEN**

ROLLER PRESS FOR EXTRUDING A FILLED OR MULTILAYERED PRODUCT OF PLASTIC CONSISTENCY

PRESSE A CYLINDRES POUR EXTRUDER UN PRODUIT FOURRE OU MULTICOUCHE A CONSISTANCE PLASTIQUE

(84) Benannte Vertragsstaaten:
CH DE DK FR GB IT LI

(30) Priorität: 04.05.1993 DE 4314726

(43) Veröffentlichungstag der Anmeldung:
21.02.1996 Patentblatt 1996/08

(73) Patentinhaber: Hosokawa Bepex GmbH
D-74207 Leingarten (DE)

(72) Erfinder:
• ALTVATER, Frank
D-74074 Heilbronn (DE)
• FUX, Günter
D-74363 Güglingen (DE)

(74) Vertreter: Goetz, Rupert, Dipl.-Ing.
Wuesthoff & Wuesthoff
Patent- und Rechtsanwälte
Schweigerstrasse 2
81541 München (DE)

(56) Entgegenhaltungen:
EP-A- 0 202 143          DE-B- 1 262 572
DE-C- 1 134 824          FR-A- 2 564 031

## Beschreibung

Die Erfindung betrifft eine Walzenpresse zum Extrudieren eines gefüllten oder mehrlagigen Stranges aus plastischen Massen, mit

- einem Gehäuse, das beiderseits einer Mittelebene je einen Zulaufkanal und je einen Druckkanal enthält,
- einer Düsenanordnung, zu der hin die Druckkanäle konvergieren,
- einer ersten und einer zweiten drehantreibbaren Förderwalze, die im Gehäuse auf je einer Seite der Mittelebene zwischen je einem der Zulaufkanäle und dem zugehörigen Druckkanal angeordnet sind und mit ihren Drehachsen eine Querebene definieren, und
- zwei zusätzlichen drehantreibbaren Walzen, die im Gehäuse auf je einer Seite der Mittelebene angeordnet sind und mit je einer der Förderwalzen je einen Walzenspalt bilden.

Bei einer aus der DE-AS 12 62 572 bekannten Walzenpresse dieser Gattung sind eine erste und eine zweite Förderwalze symmetrisch zu und in geringem seitlichen Abstand von einer senkrechten Mittelebene angeordnet, und über jeder dieser Förderwalzen ist eine Einstreichwalze mit einem sägezahnförmigen Walzenprofil ebenfalls symmetrisch zu und in möglichst geringem Abstand von der Mittelebene angeordnet. Auf diese Weise sind zwei Walzenspalte gebildet, durch die je eine plastische Masse von einem weiter außen angeordneten Einlaufkanal schräg nach unten in Richtung zur Mittelebene gefördert wird. Die beiden Masseströme werden durch zwischen den Förderwalzen angeordnete Leitbleche voneinander getrennt gehalten, bis sie unterhalb der Förderwalzen in eine gemeinsame Düsenanordnung münden, aus der sie in Form eines zweilagigen Stranges extrudiert werden.

Der Erfindung liegt die Aufgabe zugrunde, eine Walzenpresse derart weiterzubilden, daß sie imstande ist, mehr als zwei Massen gleichzeitig zu einem gefüllten oder mehrlagigen Strang schonend zu verarbeiten.

Die Aufgabe ist erfindungsgemäß ausgehend von einer Walzenpresse der eingangs beschriebenen Gattung dadurch gelöst, daß

- auf der von der Düsenanordnung abgewandten Seite der Querebene mindestens eine dritte Förderwalze angeordnet ist, der ein dritter Zulaufkanal und ein dritter Druckkanal zugeordnet sind, und
- der dritte Druckkanal zwischen der ersten und der zweiten Förderwalze hindurch zu der Düsenanordnung führt.

Die Erfindung beruht auf der Erkenntnis, daß sich zwischen der ersten und der zweiten Förderwalze Platz für einen dritten Förderkanal schaffen läßt, ohne daß der erste oder der zweite Druckkanal im Vergleich mit der vorausgesetzten Walzenpresse (DE-AS 12 62 572) wesentlich länger zu werden brauchen. Die dritte Förderwalze, und bei Bedarf eine ihr zugeordnete weitere Walze, beispielsweise Einstreichwalze, lassen sich in einer kompakten Baueinheit derart oberhalb der ersten und zweiten Förderwalze und der ihnen zugeordneten zusätzlichen Walzen so anordnen, daß auch der dritte Druckkanal nicht übermäßig lang wird.

Weiterbildungen der Erfindung sind in den Unteransprüchen beschrieben.

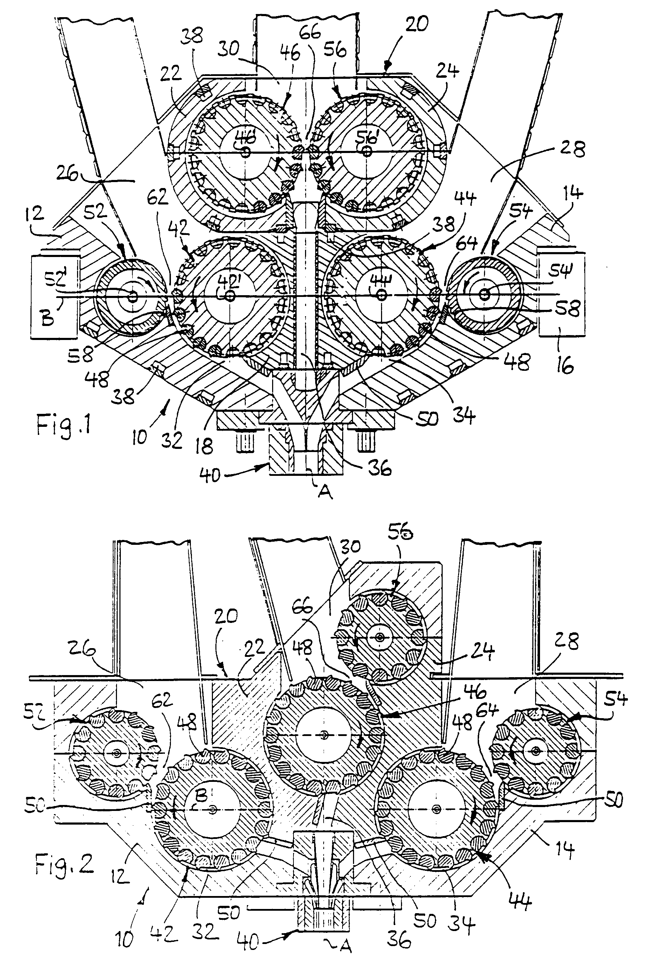

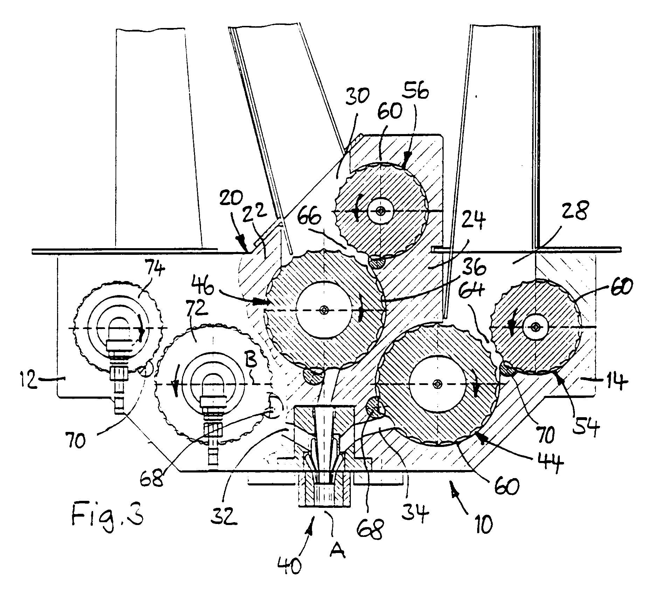

Ausführungsbeispiele der Erfindung werden im folgenden anhand schematischer Zeichnungen mit weiteren Einzelheiten erläutert. In Fig. 1 bis 3 sind drei verschiedende Walzenpressen für je drei unterschiedliche Massen in je einem senkrechten Querschnitt dargestellt.

Jede der drei dargestellten Walzenpressen hat ein Gehäuse 10, das symmetrisch in Bezug auf eine senkrechte Mittelebene A aus einer linken Gehäusehälfte 12 und einer rechten Gehäusehälfte 14 zusammengesetzt und auf einem Rahmen 16 abgestützt ist. In das Gehäuse 10 sind gemäß Fig. 1 ein unterer Gehäuseeinsatz 18 und ein oberer Gehäuseeinsatz 20 eingebaut, die beide ebenfalls symmetrisch zur Mittelebene A gestaltet sind; der untere Gehäuseeinsatz 18 ist einstückig, der obere Gehäuseeinsatz 20 hingegen aus einem linken Einsatzteil 22 und einem rechten Einsatzteil 24 zusammengesetzt. Der obere Gehäuseeinsatz 20 läßt sich als ganzes aus dem Gehäuse 10 ausbauen, ohne daß die Gehäusehälften 12 und 14 voneinander oder vom unteren Gehäuseeinsatz 20 getrennt zu werden brauchen.

Innerhalb des Gehäuses 10 ist zwischen der linken Gehäusehälfte 12 und dem linken Einsatzteil 22 sowie zwischen der rechten Gehäusehälfte 14 und dem rechten Einsatzteil 24 je ein Zulaufkanal 26 bzw. 28 ausgebildet; die beiden Einsatzteile 22 und 24 begrenzen miteinander einen mittleren Zulaufkanal 30. An die drei Zulaufkanäle 26, 28 und 30 schließt sich je ein Druckkanal 32 bzw. 34 bzw. 36 an, wobei der mittlere Druckkanal 36 den mittleren Zulaufkanal 30 gemäß Fig. 1 geradlinig nach unten hin fortsetzt. In das Gehäuse 10 sowie in die beiden Gehäuseeinsätze 18 und 20 sind Kanäle 38 eingearbeitet, die von einem Fluid zum Temperieren, also wahlweise zum Erwärmen oder zum Kühlen, durchströmbar sind. Die drei Druckkanäle 32, 34 und 36 münden in eine gemeinsame Düsenanordnung 40, die ohne Zerlegung des Gehäuses 10 ausbaubar ist und wahlweise zum mehrlagigen oder koaxialen Extrudieren dreier verschiedener Massen ausgestaltet sein kann.

Der untere Gehäuseeinsatz 18 hat gemäß Fig. 1 zwei voneinander abgewandte, teilzylindrische seitliche Ausnehmungen, die zusammen mit der linken Gehäusehälfte 12 bzw. der rechten Gehäusehälfte 14 Raum für eine erste Förderwalze 42 bzw. eine zweite Förderwalze 44 bieten. Die beiden Förderwalzen 42 und 44 sind symmetrisch zur Mittelebene A angeordnet und synchron, jedoch gegensinnig in Pfeilrichtung um je eine zur Mittelebene A parallele Drehachse 42' bzw. 44' drehantreibbar. Die Drehachsen 42' und 44' liegen in einer gemeinsamen, waagerechten Querebene B. In einem Abstand oberhalb der Querebene B ist bei jedem der drei gezeichneten Ausführungsbeispiele mindestens eine dritte Förderwalze 46 um eine waagerechte Drehachse 46' drehantreibbar angeordnet. Die Förderwalzen 42, 44 und 46 sind bei allen gezeichneten Ausführungsbeispielen gleich groß.

Gemäß Fig. 1 und 2 ist in jeder der Förderwalzen 42, 44 und 46 eine große Anzahl Drehstäbe 48 gelagert, die je eine Mitnahmeleiste bilden und während der Drehung der Förderwalzen je einmal mit einem ortsfesten Abstreifer 50 zusammenwirken, wobei sie eine hin- und hergehende Drehbewegung ausführen. Insoweit entsprechen die Förderwalzen 42, 44 und 46 denjenigen, die aus der schon erwähnten DE-AS 12 62 572 sowie aus der DE-AS 11 34 824 bekannt sind.

Bei allen drei dargestellten Ausführungsbeispielen ist jeder der beiden Förderwalzen 42 und 44 eine Einstreichwalze 52 bzw. 54 zugeordnet, die um eine Drehachse 52' bzw. 54' in Pfeilrichtung drehantreibbar ist. Die Drehachsen 52' und 54' sind in jedem Fall parallel zu den Drehachsen 42' und 44' angeordnet und liegen gemäß Fig. 1 in der Querebene B, gemäß Fig. 2 und 3 hingegen um ungefähr den Betrag D/2 oberhalb der Querebene B, wobei D den Förderwalzendurchmesser bezeichnet.

Außer den bisher beschriebenen drei Förderwalzen, 42, 44 und 46 und zwei Einstreichwalzen 52 und 54 hat jede der dargestellten Walzenpressen eine weitere Walze 56, die gemäß Fig. 1 eine vierte Förderwalze von gleicher Größe wie die Förderwalzen 42, 44 und 46, gemäß Fig. 3 und 4 hingegen eine Einstreichwalze von gleicher Größe wie die Einstreichwalzen 52 und 54 ist.

Gemäß Fig. 1 ist die weitere Walze 56 ebenso wie die Förderwalzen 42, 44 und 46 mit Drehstäben 48 ausgestattet. Diese Anordnung hat den Vorteil, daß von den beiden Walzen 46 und 56 durch den sich anschließenden mittleren Druckkanal 36 unter anderem Massen mit groben Beimengungen, wie Nußbruch, kleinen Nüssen oder Fruchtstückchen, zur Düsenanordnung 40 gefördert werden können. Der Druckkanal 36 ist vorzugsweise von einem Rohr aus aus PTFE (Polytetrafluorethylen) oder einem ähnlichen gleittördernden Material gebildet und ist vollständig gerade, damit die Strömungswiderstände auch beim Fördern solcher Massen gering gehalten werden.

Sämtliche erwähnten Förder- und Einstreichwalzen, oder auch nur einige von ihnen, können anstelle von Drehstäben 48 ein starres Walzenprofil aufweisen, das von längsgerichteten, vorzugsweise achsparallelen, Förderleisten oder Rippen und dazwischenliegenden Vertiefungen gebildet ist. So haben bei der in Fig. 1 dargestellten Walzenpresse die beiden Einstreichwalzen 52 und 54 je ein sägezahnförmiges Walzenprofil 58, während bei der in Fig. 3 dargestellten Walzenpresse sämtliche Förderwalzen 42, 44 und 46 sowie die mit ihnen zusammenwirkenden Einstreichwalzen 52, 54 und 56 ein wellenförmiges Walzenprofil 60 aufweisen. Unabhängig davon, wie die Walzen im einzelnen gestaltet sind, ist zwischen den beiden miteinander zusammenwirkenden Walzen jedes Walzenpaars 42, 52 sowie 44, 54 und 46, 56 je ein Walzenspalt 62 bzw. 64 bzw. 66 ausgebildet.

Gemäß Fig. 3 ist den Förderwalzen 42, 44 und 46 je ein teilzylindrischer Abstreifstab 68 zugeordnet, während den Einstreichwalzen 52, 54 und 56, die alle einen kleineren Durchmesser haben, je ein teilzylindrischer Abstreifstab 70 von kleinerem Durchmesser zugeordnet ist. Die Abstreifstäbe 68 und 70 haben je eine ortsfeste Drehachse, die sich parallel zur Drehachse der zugehörigen Walze erstreckt, und sind derart gesteuert, daß sie hin- und hergehende Drehungen um ihre Achse ausführen, bei denen sie während der Drehung der zugehörigen Walze deren Profil folgen und es ausschaben. So sind die Abstreifstäbe 68 von je einer Kurvenscheibe 72 gesteuert, die mit der zugehörigen Förderwalze 42 bzw. 44 bzw. 46 zu gemeinsamer Drehung verbunden ist, und die Abstreifstäbe 70 sind von je einer Kurvenscheibe 74 gesteuert, die mit der zugehörigen Einstreichwalze 52 bzw. 54 bzw. 56 zu gemeinsamer Drehung verbunden ist. Einzelheiten dieser Steuerung ergeben sich aus der zeitranggleichen Patentanmeldung (Anwaltsakte 1A-70 033) der Anmelderin.

Gegenüber der Walzenpresse gemäß Fig. 1 hat die in Fig. 2 dargestellte den Vorteil, daß jeder der drei Druckkanäle 32, 34 und 36 sich um einen erheblichen Winkel von nahezu 180° um die zugehörige Förderwalze 42 bzw. 44 bzw. 46 herumerstreckt, so daß an jeder von ihnen ungefähr die Hälfte der insgesamt an ihr angeordneten Drehstäbe 48 für einen Druckaufbau in der geförderten Masse sorgen. Unterstützt durch die zugehörigen Einstreichwalzen 52, 54 und 56 sind die Förderwalzen 42, 44 und 46 gemäß Fig. 2 in der Lage, Massen auch bei höherem Gegendruck der Düsenanordnung 40 mit sehr hohem Wirkungsgrad zu fördern. Deshalb eignet sich die in Fig. 2 dargestellte Walzenpresse besonders gut zur Verarbeitung von stark fetthaltigen Massen wie Mandel- und Nußnougat, sowie Buttercreme und ähnlichen Massen.

Mit geringen Einschränkungen gilt entsprechendes auch für die Walzenpresse gemäß Fig. 3, die gegenüber der in Fig. 2 dargestellten den Vorteil eines bedeutend geringeren technischen Aufwandes und somit geringerer Herstellkosten hat.

**Patentansprüche**

1. Walzenpresse zum Extrudieren eines gefüllten oder mehrlagigen Stranges aus plastischen Massen, mit

   - einem Gehäuse (10), das beiderseits einer Mittelebene (A) je einen Zulaufkanal (26,28) und je einen Druckkanal (32,34) enthält,
   - einer Düsenanordnung (40), zu der hin die Druckkanäle (32, 34) konvergieren,

- einer ersten und einer zweiten drehantreibbaren Förderwalze (42, 44), die im Gehäuse (10) auf je einer Seite der Mittelebene (A) zwischen je einem der Zulaufkanäle (26, 28) und dem zugehörigen Druckkanal (32, 34) angeordnet sind und mit ihren Drehachsen (42', 44') eine Querebene (B) definieren, und
- zwei zusätzlichen drehantreibbaren Walzen (52, 54), die im Gehäuse (10) auf je einer Seite der Mittelebene (A) angeordnet sind und mit je einer der Förderwalzen (42, 44) je einen Walzenspalt (62, 64) bilden,

dadurch **gekennzeichnet**, daß

- auf der von der Düsenanordnung (40) abgewandten Seite der Querebene (B) mindestens eine dritte drehantreibbare Förderwalze (46) angeordnet ist, der ein dritter Zulaufkanal (30) und ein dritter Druckkanal (36) zugeordnet sind, und
- der dritte Druckkanal (36) zwischen der ersten und der zweiten Förderwalze (42, 44) hindurch zu der Düsenanordnung (40) führt.

2. Walzenpresse nach Anspruch 1,
dadurch **gekennzeichnet**, daß
die Drehachsen (52', 54') der beiden zusätzlichen Walzen (52, 54) von der Mittelebene (A) weiter als die Drehachsen (42', 44') der beiden Förderwalzen (42, 44) entfernt sind und von der Querebene (B) höchstens einen Abstand von (D + d)/2 haben, wobei D den Durchmesser der zugehörigen Förderwalze (42, 44) und d den Durchmesser der betreffenden zusätzlichen Walze (52, 54) bezeichnet.

3. Walzenpresse nach Anspruch 1 oder 2,
dadurch **gekennzeichnet**, daß
die Drehachsen (52', 54') der beiden zusätzlichen Walzen (52, 54) in der Querebene (B) liegen.

4. Walzenpresse nach Anspruch 2 oder 3,
dadurch **gekennzeichnet**, daß
die dritte Förderwalze (46) und eine weitere Walze (56) symmetrisch zur Mittelebene (A) angeordnet sind.

5. Walzenpresse nach einem der Ansprüche 1 bis 3,
dadurch **gekennzeichnet**, daß
die Drehachse (46') der dritten Förderwalze (46) in der Mittelebene (A) liegt.

6. Walzenpresse nach einem der Ansprüche 1 bis 5,
dadurch **gekennzeichnet**, daß
der dritte Druckkanal (36) mit einem gleitfördernden Werkstoff wie PTFE ausgekleidet ist.

7. Walzenpresse nach einem der Ansprüche 1 bis 6,

dadurch **gekennzeichnet**, daß
mindestens die Förderwalzen (42, 44, 46) eingelagerte Drehstäbe (48) aufweisen, die je eine achsparallele Förderleiste bilden.

8. Walzenpresse nach einem der Ansprüche 1 bis 7,
dadurch **gekennzeichnet**, daß
sämtliche Walzen (42, 44, 46; 52, 54, 56) ein von starren Mitnahmeleisten und dazwischenliegenden Vertiefungen gebildetes Walzenprofil (58 bzw. 60) aufweisen und mit je einem parallel zu ihnen ortsfest gelagerten, hin- und herdrehbaren Abstreifstab (68 bzw. 70) zusammenwirken.

9. Walzenpresse nach einem der Ansprüche 1 bis 8,
dadurch **gekennzeichnet**, daß
das Gehäuse (10) einen unabhängig von der ersten und der zweiten Förderwalze (42, 44) und von den zugehörigen zusätzlichen Walzen (52, 54) ausbaubaren zentralen Gehäuseeinsatz (20) enthält, in dem die dritte Förderwalze (46) und eine mit ihr einen dritten Walzenspalt (66) bildende Walze (56) gelagert sind.

10. Walzenpresse nach einem der Ansprüche 1 bis 9,
dadurch **gekennzeichnet**, daß
der dritte Druckkanal (36) temperierbar ist.

**Claims**

1. A roll-type press for extruding a filled or multi-layer strand of plastic compositions, said press comprising

- a casing (10) which contains on either side of a center plane (A) one inlet channel (26, 28) and one pressure channel (32, 34) each,
- a jet arrangement (40), in the direction of which the pressure channels (32, 34) converge,
- a first and a second rotatably driven feeding roll (42, 44) which are arranged within the casing (10) on each side of the center plane (A) between one of the inlet channels (26, 28) and the associated pressure channel (32, 34) and have their axes of rotation (42', 44') define a transverse plane (B), and
- two additional rotatably driven rolls (52, 54) which are arranged within the casing (10) on one side of the center plane (A) each and form together with one of the feeding rolls (42, 44) each one nib (62, 64) each,

**characterized** in that

- on the side of the transverse plane (B) remote from the jet arrangement (40) at least a third rotatably driven feeding roll (46) is arranged to which a third inlet channel (30) and a third pressure channel (36) are assigned, and in that

- the third pressure channel (36) runs between the first and the second feeding roll (42, 44) to lead to the jet arrangement (40).

2. A roll-type press according to claim 1, **characterized** in that the axes of rotation (52', 54') of the two additional rolls (52, 54) are spaced farther from the center plane (A) than the axes of rotation (42', 44') of the two feeding rolls (42, 44) and have at most a distance (D + d)/2 from the transverse plane (B), wherein D defines the diameter of the respective feeding roll (42, 44) and d defines the diameter of the additional roll (52, 54) concerned.

3. A roll-type press according to claim 1 or 2, **characterized** in that the axes of rotation (52', 54') of the two additional rolls (52. 54) are contained in the transverse plane (B).

4. A roll-type press according to claim 2 or 3, **characterized** in that the third feeding roll (46) and a further roll (56) are symmetrically disposed with respect to the center plane (A).

5. A roll-type press according to any of claims 1 to 3, **characterized** in that the axis of rotation (46') of the third feeding roll (46) is contained in the center plane (A).

6. A roll-type press according to any of claims 1 to 5, **characterized** in that the third pressure channel (36) has a lining made of a slip enhancing material such as PTFE.

7. A roll-type press according to any of claims 1 to 6, **characterized** in that at least the feeding rolls (42, 44, 46) have mounted therein rotary bars (48) which constitute each a conveyor ledge parallel to the axis.

8. A roll-type press according to any of claims 1 to 7, **characterized** in that all of the rolls (42, 44, 46; 52, 54, 56) have a roll profile (58 and 60, respectively) formed of rigid conveyor ledges and intermediately disposed recesses and cooperate each with a stationarily supported, parallel, alternately rotating stripper bar (68 and 70, respectively).

9. A roll-type press according to any of claims 1 to 8, **characterized** in that the casing (10) contains a central casing insert (20) which is removable independently from the first and the second feeding roll (42, 44) and from the associated additional rolls (52, 54), and in which are supported the third feeding roll (46) and a roll (56) defining with the latter a third nib (66).

10. A roll-type press according to any of claims 1 to 9, **characterized** in that the third pressure channel (36) is subject to temperature equalization.

## Revendications

1. Presse à cylindres pour extruder une barre fourrée ou à plusieurs couches en matériaux à consistance plastique, comprenant

   - un bâti (10) qui, de chaque côté d'un plan médian (A) contient un canal d'alimentation (26, 28) et un canal de pression (32, 34),
   - un système de filière (40) vers lequel convergent les canaux de pression (32, 34),
   - un premier et un second cylindres d'alimentation pouvant être entraînés en rotation (42, 44) qui sont disposés dans le bâti (10) chacun d'un côté du plan médian (A) chacun entre un des canaux d'alimentation (26, 28) et le canal de pression associé (32, 34) et dont les axes de rotation (42', 44') définissent un plan transversal (B), et
   - deux cylindres supplémentaires pouvant être entraînés en rotation (52, 54) qui sont disposés dans le bâti (10), chacun d'un côté du plan médian (A) et forment chacun avec l'un des cylindres d'alimentation (42, 44) une emprise (62, 64),

   caractérisée en ce que

   - au moins un troisième cylindre d'alimentation pouvant être entraîné en rotation (46) est disposé du côté opposé au système de filière (40) du plan transversal (B), auquel sont associés un troisième canal d'alimentation (30) et un troisième canal de pression (36), et
   - le troisième canal de pression (36) mène au système de filière (40) en passant entre le premier et le deuxième cylindre d'alimentation (42, 44).

2. Presse à cylindres selon la revendication 1, caractérisée en ce que les axes de rotation (52', 54') des deux cylindres supplémentaires (52, 54) sont plus éloignés du plan médian (A) que les axes de rotation (42', 44') des deux cylindres d'alimentation (42, 44) et présentent un espacement par rapport au plan transversal (B) d'au plus (D + d)/2 , D étant le diamètre du cylindre d'alimentation associé (42, 44) et d étant le diamètre du cylindre supplémentaire concerné (52, 54).

3. Presse à cylindres selon la revendication 1 ou 2, caractérisée en ce que

les axes de rotation (52', 54') des deux cylindres supplémentaires (52, 54) sont dans le plan transversal (B).

4. Presse à cylindres selon la revendication 2 ou 3, caractérisée en ce que
le troisième cylindre d'alimentation (46) et un autre cylindre (56) sont disposés symétriquement par rapport au plan médian (A).

5. Presse à cylindres selon l'une quelconque des revendications 1 à 3,
caractérisée en ce que
l'axe de rotation (46') du troisième cylindre d'alimentation (46) se trouve dans la plan médian (A).

6. Presse à cylindres selon l'une quelconque des revendications 1 à 5,
caractérisée en ce que
le troisième canal de pression (36) est revêtu d'un matériau anti-friction tel que le PTFE.

7. Presse à cylindres selon l'une quelconque des revendications 1 à 6,
caractérisée en ce que
au moins les cylindres d'alimentation (42, 44, 46) présentent des barres pivotantes incluses (48) qui forment chacune une nervure d'alimentation parallèle à l'axe.

8. Presse à cylindres selon l'une quelconque des revendications 1 à 7,
caractérisée en ce que
tous les cylindres (42, 44, 46; 52, 54, 56) présentent un profil de cylindre (58, respectivement 60) formé de nervures d'entraînement rigides et de creux disposés entre celles-ci et coopèrent chacun avec une barre de raclage (68, respectivement 70) qui leur est parallèle, montée fixe et qui peut tourner alternativement dans les deux sens.

9. Presse à cylindres selon l'une quelconque des revendications 1 à 8,
caractérisée en ce que
le bâti (10) contient, indépendamment des premier et second cylindres d'alimentation (42, 44) et des cylindres supplémentaires associés (52, 54), une partie (20) amovible centrale dans laquelle sont montés à rotation le troisième cylindre d'alimentation (46) et un cylindre (56) formant avec celui-ci une troisième emprise (66).

10. Presse à cylindres selon l'une quelconque des revendications 1 à 9,
caractérisée en ce que
le troisième canal de pression (36) peut être équilibré thermiquement.

Fig.1

Fig.2

7

Fig. 3